Europäisches Patentamt

(19) European Patent Office

Office européen des brevets

(11) Publication number: **0 277 103 B1**

(12) **EUROPEAN PATENT SPECIFICATION**

(45) Date of publication of patent specification :
03.07.91 Bulletin 91/27

(51) Int. Cl.⁵ : **B60D 1/00**

(21) Application number: **88850014.7**

(22) Date of filing : **15.01.88**

(54) Towing device for a tractor.

(30) Priority : **16.01.87 FI 870187**

(43) Date of publication of application :
**03.08.88 Bulletin 88/31**

(45) Publication of the grant of the patent :
**03.07.91 Bulletin 91/27**

(84) Designated Contracting States :
**AT FR GB SE**

(56) References cited :
EP-A- 0 024 972
GB-A- 982 109
GB-A- 1 241 083
GB-A- 2 009 579
GB-A- 2 042 316

(73) Proprietor : **Valmet Oy**
**Punanotkonkatu 2**
**SF-00130 Helsinki 13 (FI)**

(72) Inventor : **Mänttäri, Erkki**
**Hillakuja 5**
**SF-40340 Jyväskylä (FI)**

(74) Representative : **Rostovanyi, Peter et al**
**AWAPATENT AB Box 5117**
**S-200 71 Malmö (SE)**

EP 0 277 103 B1

Jouve, 18, rue Saint-Denis, 75001 PARIS

## Description

This invention relates generally to a towing device for a tractor. More specifically, the invention concerns a towing device of the type stated in the preamble of appended claim 1, which is based on EP-A-24 972.

Conventional farm tractors are provided with a towing device to which the user may select to connect, for example, a trailer or various tools, machines and the like. Hitching implements for trailers and tools differ, however, and consequently it must be possible to either connect the aforementioned hitching implements to the towing device or the the towing device must constructed in such a way as to possess both of these hitching implements. The hitching implement for trailers referred to is generally a towing hook which cannot, however, be used for hitching other tools or machines ; these require their own towing devices. When using a tractor in conventional farm work for carrying out different jobs, the tractor operator needs to switch over between the towing hook and agricultural towing devices almost daily. Earlier, the convertibility of the towing hook and agricultural towing devices was difficult and time consuming as a consequence of which various systems have been developed to improve their convertibility. The most common way of arranging convertibility between the towing hook and agricultural towing devices is to have the frame of the towing device from a solid part of the towing hook's frame which is normally articulated to the frame of the tractor allowing it to swivel between top and bottom positions. To the frame of such a towing hook is then connected a so-called agricultural towing device which normally comprises a replaceable, separate cassette. One such solution is shown in EP-A-77 191. Handling a separate cassette such as this is, however, difficult as the cassette weighs quite a lot. Furthermore, connecting an agricultural towing device to the frame of a towing hook results in preventing the use of the towing hook for towing a trailer, for example. This being so, the towing device has to be disconnected if the towing hook is required for towing.

As an improvement on the above system, EP-A-24 972, for example, describes an arrangement whereby the tractor's drawbar is constructed in such a way as to allow it to be turned around with a towing hook one one end and an agricultural towing device on the other end. A drawbar such as this is thus connected to the frame of the towing device in the manner appropriate for the purpose in question. Turning the drawbar of the type described in EP-A-24 972 is, however, difficult since the drawbar is connected to the towing device's frame with fastening bolts which are located far under the tractor's chassis. Thus, turning the drawbar is difficult to accomplish and neither can the drawbar be properly turned if the tractor happens to be in difficult terrain ; e.g. on a soft field. Another disadvantage in a towing device of the type described in EP-A-24 972 is that when the agricultural towing device is connected to the towing device's frame, the towing device's distance from the tractor's power take-off shaft is constant. Thus, each of the ISO standard's efficiency categories requires an individual agricultural towing device because the standard referred to above sets down the distance that the towing point must lie away from the end of the tractor's power take-off shaft.

The object of the present invention is to achieve an essential improvement with regard to State of Art devices and provide a towing device in which the drawbar's connectibility to the towing devices frame can be arranged in a simple, easy manner. Another object of the invention is to provide a towing device in which the drawbar includes both a towing hook and an agricultural towing device and in which the drawbar can be easily turned around.

According to the invention, these and even other objects are achieved by a towing device which is of the type described by way of introduction and which further has the features stated in the characterising clause of appended claim 1. Preferred embodiments of the invention are stated in the appended subclaims.

The device in accordance with the invention leads to several advantages in comparison with State of Art one of which is that in accordance with the invention the drawbar can be attached to the towing device's frame with considerable ease and in a simple manner requiring no special tools. The installation and disconnection of the drawbar is particularly easy because the hitching implements for the drawbar have been formed in such a manner that they can be accessed directly from behind the tractor without needing to go under the tractor. A further advantage in the device in accordance with the invention is that the agricultural towing device can be attached to the towing device's frame in several positions with the distance from the power take-off shaft to the agricultural towing device's towing point being different. Another particular possessed by the invention is that in the device in accordance with the invention the drawbar can be constructed to be "double-headed" by having a towing hook at one end of the drawbar and an agricultural towing device at the opposite end, the use and convertibility of which said devices is extremely easy.

The invention is described in the following with the help of an example and references made to the figures in the appended drawing.

Figure 1 shows a side view of the drawbar used in the towing device in accordance with the invention.

Figure 2 also shows a side view of the drawbar in accordance with figure 1, but in a plane perpendicular to that of figure 1.

Figure 3 shows a plan view of frame of the towing device in accordance with the invention.

Figure 4 shows a longitudinal section viewed from the side of the frame of the towing device in accordance with figure 3.

Figure 5 shown a plan view of the frame of the towing device to which a drawbar in accordance with figures 1 and 2 has been installed.

Figure 6 corresponds to figure 5 viewed from the side.

Figure 7 is a section view of the frame of the towing device along the axis VII-VII of figure 4.

Figure 8 shows on a larger scale the guide bolt which is used in guiding and connecting of the drawbar in relation to the frame of the towing device.

Figure 9 shows on a larger scale the fastening bolt which is used to fasten the drawbar to the frame of the towing device.

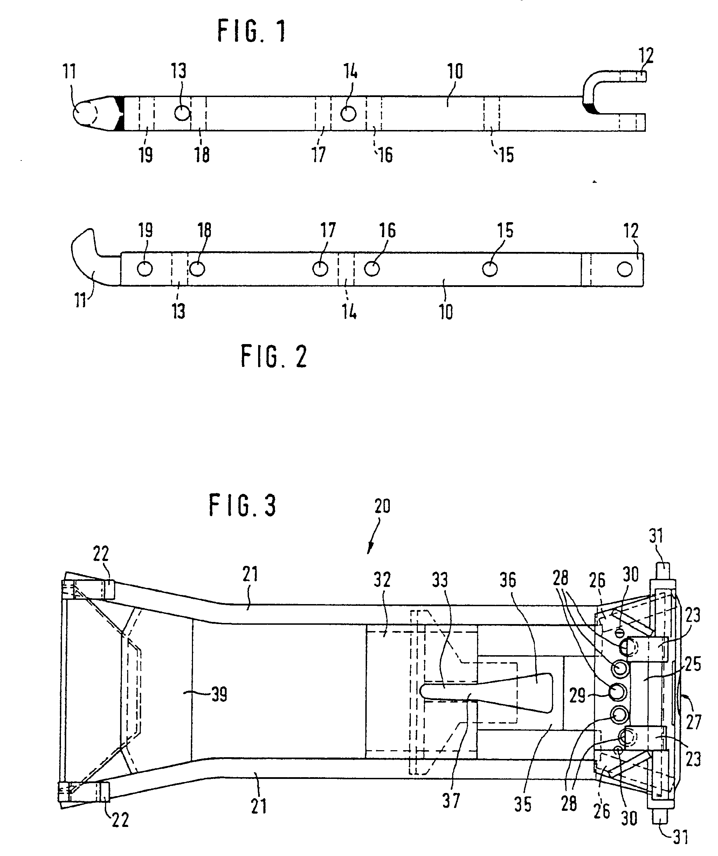

The drawbar 10 shown in figures 1 and 2 is a "double-headed" drawbar which at one end has a conventional towing hook 11 and at the opposite end an agricultural towing device 12 used in connection with various agricultural tools. Required by the towing hook 11, holes 13 and 14 have been formed in the drawbar 10 to enable drawbar 10 to be fastened onto the frame of the towing device ; similarly, as required by the agricultural towing device 12, in order to fasten the drawbar 10 to the frame of the towing device, fastening holes 15-19 have been formed in the frame of the towing device. The purpose of the location and number of the above mentioned holes becomes best apparent in the description to follow in which the installation of the drawbar 10 to the towing device's frame 20 is described in detail. As becomes apparent from figures 1 and 2, the towing hook 11 and the agricultural towing device 12 are fitted crosswise onto the drawbar 10 so that in switching over from using the towing hook 11 to using the agricultural towing device 12 it is necessary firstly to turn the drawbar 10 around in relation to its transverse axis and in addition the drawbar 10 has to be rotated 90 degrees around its longitudinal axis. This is due to the fact that, because the heights of both the towing hook 11 and the agricultural towing device 12 exceed significantly the height of the drawbar 10, it would not be possible to install the drawbar 10 by pushing it longitudinally into the aperture of equivalent height to that of the drawbar 10 were the heights of both the towing hook 11 and the agricultural towing device 12 oriented in the same direction. On the other hand, because several holes need to be formed in the drawbar 10 to facilitate its fastening, it is easier and simpler to form these holes in such a manner that the holes for the towing hook 11 and the holes for the agricultural towing device 12 are crosswise to one another.

Furthermore, there is reason at this conjunction to emphasize the point that with regard to the towing device in accordance with the invention the intention is not to confine it solely to a solution in which a "double-headed" drawbar is employed, because the towing device in accordance with the invention is, naturally, also able to accommodate a drawbar in the one end of which drawbar is fastened either a towing hook 11 or an agricultural towing device 12 but whose other end is void of such an attachment. In a solution of this kind the drawbar will, naturally, be provided with holes for either the towing hook 11 or the agricultural towing device 12. In a "single-headed" solution the drawbar can be constructed to be significantly shorter than is the case with the "double-headed" drawbar 10. In addition, figures 1 and 2 clearly show that in the "double-headed" drawbar 10 the drawbar is square in cross section. This in turn is due to the towing hook 11 and the agricultural towing device 12 being installed on the drawbar 10 crosswise to one another as is described above and consequently it must also be possible to install the drawbar 10 in the aperture reserved for it by turning the drawbar 10 ninety degrees around its longitudinal axis into two different positions.

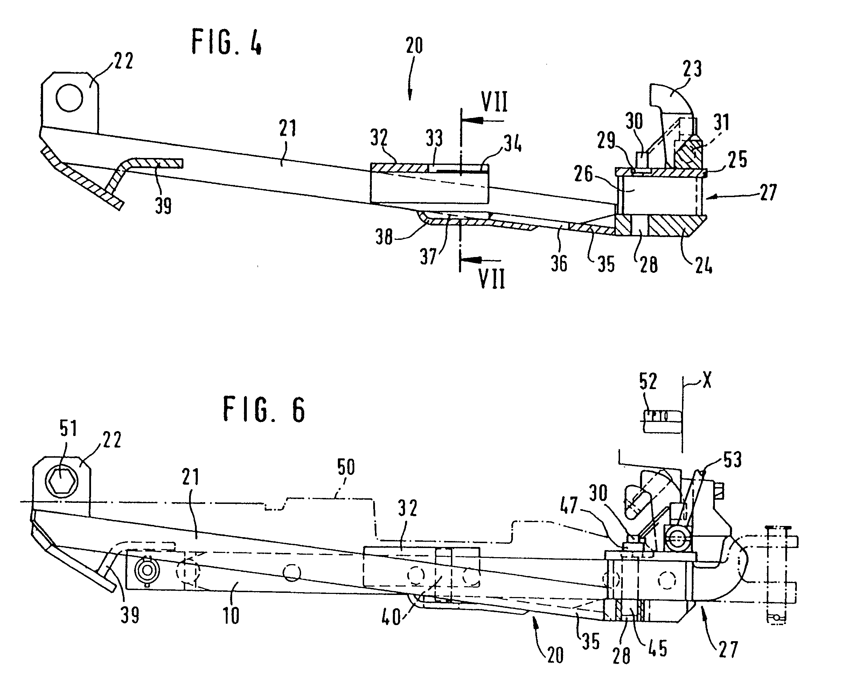

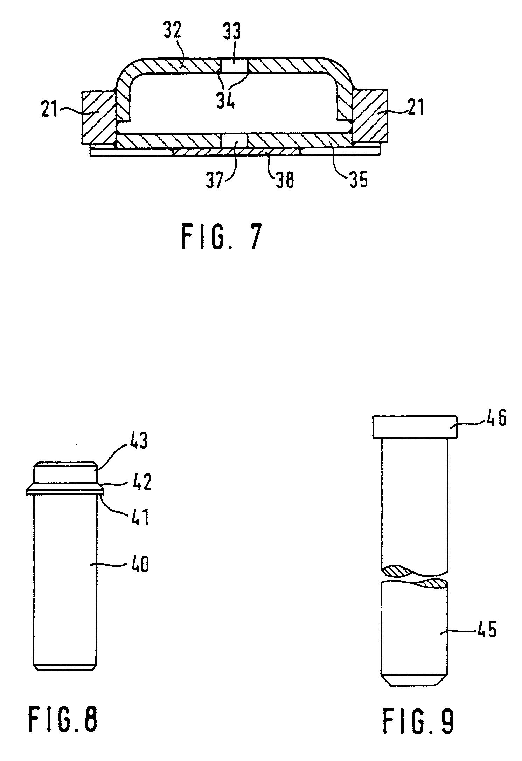

Figure 3 is a plan view of the towing device's frame 20 and figure 4 shows the same towing device's frame 20 longitudinal section viewed from the side. The towing device's frame 20 consists of the longitudinal beams 21 at the other end of which are located fastening lugs 22 via which the towing device's frame is arranged by way of a joint to be connected to the frame of the tractor and at the opposite end are located conventional locking devices 23 for the purpose of locking the towing device's frame 20 into place and the necessary faatening devices for the drawbar 10. These fastening devices consist of the bottom plate 24 fitted between the longitudinal beams 21, the top plate 25 situated above the bottom plate 24 at a distance determined by the height of the drawbar 10, and the aide walls 26 joining the bottom plate 24 and the top plate 25. The bottom plate 24, top plate 25 and side walls 26 confine the aperture 27 via which the drawbar 10 is intended to be installed to the towing device's frame 20 by pushing the drawbar 10 longitudinally. The holes 28 required for the fastening bolt of the drawbar 10 have been formed through the bottom plate 24 end the top plate 25. The fastening bolt 45 is shown in more detail in figure 9 and the afore mentioned fastening bolt 45 is a conventional bolt with a shoulder and a widened heed. Correspondingly, shoulders have been constructed into the holes 28 formed in the top plate 25 to which said holes the widened heed 46 of the fastening bolt 45 is intended to fit. The height of the shoulders 29 in the holes 28 is such that the widened head 46 of the fastening bolt 45 fits into the shoulder 29 in such a manner that the top of the fastening bolt 45 will be level with the top surface of the top plate 25.

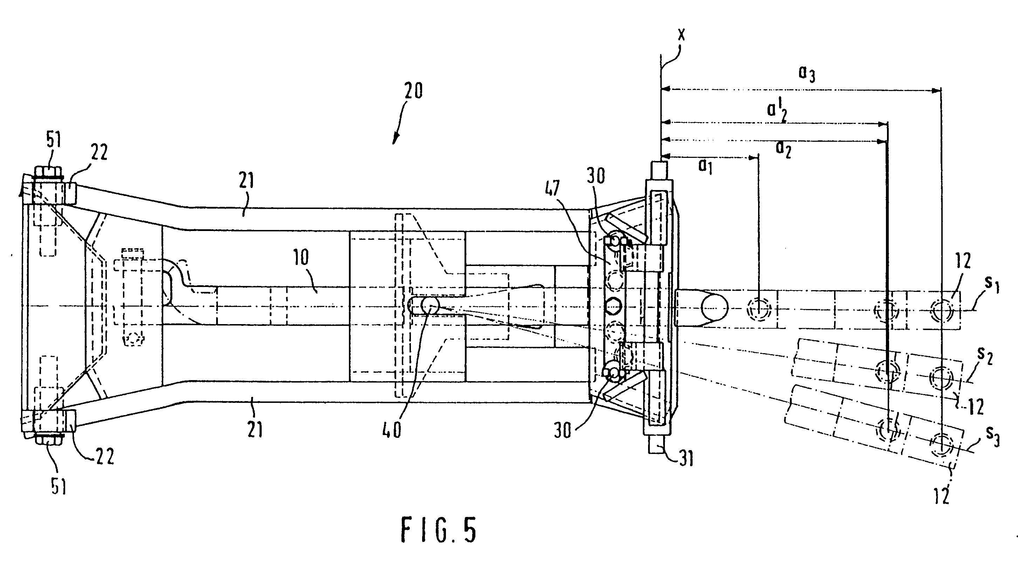

As has been mentioned in the above, the height of the aperture 27 is essentially of the same magnitude as that of the drawbar 10. The width of aperture 27, on the other hand, is of such an extent that the drawbar 10 can be installed onto the towing device's frame 20 sideways in several different positions. As is shown in figure 3, five holes 28 have been formed in the bottom plate 24 and the top plate 25 for the fastening bolt 45, the said holes 28 being arranged side by side along a curved line relative to one another. The afore mentioned arrangement of the holes 28 affects the position of the towing device 12 in relation to the towing device's frame 20 as is best revealed by figure 5 and the description to follow. In addition, the top plate 25 is provided with studs 30 to which the thrust plate 47 shown in figures 5 and 6 is intended to be connected ; the thrust plate 47 is used to lock the fastening bolt 45 of the drawbar 10 into place. In addition, the top plate is provided with conventional joint pins 31 to which the draw-rods 53 shown in figure 6 are intended to be connected by way of a joint. The afore mentioned draw-rods 53 enable the towing device's frame 20 to be moved up and down in the conventional manner.

The second hitching implements have been installed onto the longitudinal beams 21 of the towing device's frame some distance away from the aperture midway along the towing device's frame for the purpose of supporting the drawbar 10. The second hitching implements includes the top support plate 32, which in accordance with figure 7 is fastened between the longitudinal beams 21 by welding, for example. Fastened below the top support plate 32 onto the longitudinal beams 21 is the bottom support plate 35 whose distance away from the top support plate 32 is equal to the height of the aperture 27. The bottom support plate is parallel to the top support plate 32 for the length of the top support plate 32, but the bottom support plate has been extended past the top support plate 32 up to the base plate 24 of the aperture 27 in such a manner that the bottom support plate 35 is inclined down toward the afore mentioned base plate 24. A longitudinal guide groove 33 has been formed onto the top support plate 32 essentially in the middle of the said plate the purpose of the guide groove 33 being to guide the drawbar 10 with the help of the guide stud 40 fitted laterelly onto the drawbar and which is best shown in figure 8. Correspondingly, a longitudinal groove 37 for the guide stud 40 has been formed in the same place onto the bottom support plate 35, which said longitudinal groove on the bottom support plate's rearward inclined part continues as a rearward widening gap 36. The chamfers 34 formed onto the bottom edges of the longitudinal guide groove 33 on the top support plate 32 are there to improve the guiding function of the guide stud 40 and correspondingly a collar 41 has been formed onto the guide stud 40 which said collar's 41 upper edge has been provided with a chamfer 42 to correspond to the chamfers 34 of the groove 33. As the guide stud 40 enters the grooves 33 end 37, the top part 43 of the guide stud enters the groove 33 and the chamfer 42 on the stud meets the chamfers 34 of the guide groove 33. As shown in figure 6, the guide stud 40 has been formed so long that it extends through the drawbar 10 in such a manner that the part of the guide stud 40 which extends through the drawbar 10 enters the groove 37 which has been formed into the bottom,support plate 35. The said guide stud 40 thus guides the drawbar 10 only laterally and is not involved in transmitting tractive effort at all. A guide plate 39 is fastened underneath the bottom support plate 35 as is clearly shown in figures 3 and 4. In addition, a guide plate 39 is fastened onto the end of the longitudinal beams 21 next to the fastening lugs 22 ; the guide plate 39 is intended to support and guide the inside end of the drawbar 10 when the drawbar 10 is installed in the towing device's frame 20.

Figures 5 and 6 show the towing device in accordance with the invention as a whole ; i.e. with the drawbar 10 installed in the towing device's frame 20. The dashed lines in figure 5 show the alternative positions of the agricultural towing device 12 in relation to the towing device's frame 20 and figure 6 is a schematic presentation of the location of the towing device in relation to the tractor chassis 50 drawn in figure 6 using dot-dash marking. The towing device's frame 20 is fastened in accordance with figures 5 and 6 onto the frame structures of the tractor with fastening bolts 51 onto which the towing device's frame is hinged via the fastening lugs 22. Thus, the towing device's frame 20 is hinged in the conventional swinging manner in relation to the fastening bolts 51 and the elevation of the frame of the towing device can be changed by using the draw-rods 53. The drawbar 10 is installed into the towing device's frame 20 in the following manner. The locking devices 23 on the towing device's frame 20 are releaaed and the towing device's frame 20 is lowered. It the purpose is to use the towing hook 11 end of the drawbar 10, then the drawbar 10 is pushed into the aperture 27 so that the end with the agricultural towing device 12 goes in first. The drawbar 10 is pushed into the aperture to the extent that the hole 14 intended for the guide stud 40 (see figures 1 and 2) is pushed entirely through the aperture 27 and past the bottom plate 24 and top plate 25. Next, the guide stud 40 is fitted into the said hole 14 and the drawbar 10 is pushed further inward. The part of the guide stud 40 which extends through the drawbar 10 then comes into contact with the gap 36 whose edges guide the guide stud 40 to the middle in such a way that the bottom part of the guide stud 40 enters the groove 37 and the guide stud's 40 top part 43 enters the guide groove 33. Thus, the drawbar 10 is guided by the guide stud 40 and grooves 33 and 37 to its correct lateral position. Following this, the drawbar 10 is pushed more further inward until the hole 13 in the drawbar 10 is parallel with the middle hole 28 situated in the aperture's 27 bottom plate 24 and top plate 25. Following this, the fastening bolt 45 is fitted through the holes 28 and 13 in such a manner that the head of the bolt 45 reaches the top surface of the top plate 25. Following this, the thrust plate 47 is put in place. The thrust plate 47 has holes to accommodate the studs 30 and the said studs 30 are fitted in to the holes in the thrust plate 47. The thrust plate 47 is secured following this by fitting cotter pins into the studs 30. Following this, the towing device's frame 20 is raised to its top position and locked into place using the locking device 23.

When following this one wishes to use the agricultural towing device 12 instead of the towing hook 11, the procedure is as follows. Firstly, the drawbar 10 is removed from the towing device's frame 20 by carrying out the afore mentioned tasks in the reverse order. Following this, the drawbar 10 is turned the other way around and then it is pushed into the aperture 27 with the towing hook 11 end ahead. The towing device in accordance with the invention enables the towing device to be installed into the towing device's frame 20 longitudinally into three alternative positions depending on the type tool which is to be connected to the agricultural towing device. In the above it has already been pointed out that the drawbar 10 has to be adjustable longitudinally because the ISO standards set down for the various efficiency categories the distance required between the towing point, in this case the agricultural towing device, and end of the power take-off shaft 52. The location of the power take-off shaft 52 is shown schematically in figure 6 and additionally in figures 5 and 6 the symbol x is used to denote the location of the end of the power take-off shaft 52. Depending on the desired position of the agricultural towing device 12, the drawbar 10 is then at first pushed into the aperture 27 for a desired distance so that the guide stud 40 can be fitted into one of the holes 19, 18 or 17. Fitting the guide stud 40 into the hole 19 corresponds to distance a3, hole 18 to distance a2 and hole 17 to distance a1, these distances being measured from the agricultural towing device to the end x of the power take-off shaft 52. When the guide stud 40 has been fitted into one of the boles 19, 18 or 17 intended for it, the drawbar 10 is pushed inward until the guide stud 40 meets the grooves 33 and 37 as was described above in connection with the towing hook 11. Following this the drawbar 10 is pushed inward until the corresponding hole 17, 16, 15 is parallel with the hole 28 located in the bottomplate 24 and the top plate 25. Following this, the fastening bolt 45 is fitted into place in the manner described above. Fitting the fastening bolt 45 into the hole 17 corresponds to distance a3, hole 16 to distance a2 and hole 15 to distance a1, these distances being measured from the agricultural towing device to the end x of the power take-off 52. When the fastening bolt 45 has been fitted into place, the fastening bolt 45 is secured using the thrust plate 47 as has already been described above. In the towing device in accordance with the invention it is thus possible to install the agricultural towing device 12 to the towing device's frame 20 at three different distances from the end x of the power take-off shaft 52. That the position of the agricultural towing device 12 with respect to the power take-off shaft 52 is adjustable is of importance because when using a universal shaft-driven accessory connected to the agricultural towing device 12 it is most advantageous if the distance between the towing point and the said power take-off is equal to the distance between the union of the universal shaft and the said power take-off. When this is achieved the speed variation in the universal shaft system is as its minimum.

For example, certain accessories used in agriculture need to be connected to a tractor in such a manner that the accessory follows a different path to that of the tractor ; i.e. the accessory is intended to move aside from the path followed by the tractor. Due to this, the towing device in accordance with the invention is constructed in such a manner as will allow the drawbar 10 to be installed to the extent desired eccentrically in relation to midsection of the towing device's frame 20. Due to this, several holes 28 have been formed next to one another into the towing device's frame 20 for the fastening bolt 45, and the application example shown in the appended figures show five such holes 28 whereupon it is possible to install the drawbar 10 in five different positions eccentric to the midsection of the towing device's frame 20. In figure 5 this has been illustrated by presenting the agricultural towing device 12 with dot-dash marking in the middle position s1 and in two positions s2 and s3 sideways from the middle position. Since the distance between the end x of the power take-off shaft and the towing point in the eccentric positions has to remain essentially the same as when the towing point is in the middle position, the holes 28 intended for the fastening bolt 45 have not been arranged crosswise to lie on the same straight line ; instead, the said holes 28 have been arranged so that the middle fastening hole 28, which corresponds to the agricultural towing device's 12 middle position si, is located innermost on the towing device's frame 20, whereas the fastening hole 28 corresponding to the first eccentric position s2 is located longitudinally along the device outward from the middlemost fastening hole and the fastening hole corresponding to the outermost position s3 is located even further than the previous fastening hole. Thus, the fastening holes 28 are arranged along a curved line in relation to each other as becomes readily apparent from figures 3 and 5. This arrangement is advantageous in that when the agricultural towing device 12 is in the eccentric positions s2 and s3 in relation to the middle position s1, the distance between the agricultural towing device 12 and the end x of the power take-off shaft 52 is essentially the same as when the agricultural towing device 12 is in the middle position s1. As shown by figure 5, when the agricultural towing device 12 is in the outermost position the distance a3 between the agricultural towing device 12 and the end x of the power take-off shaft 52 is the same regardless of whether the agricultural towing device 12 is in the middle position s1 or the eccentric positions s2 or s3. Also when the agricultural towing device 12 is in its second to outermost position the distance between the agricultural towing device 12 and the end x of the power take-off shaft is with very great accuracy the same regardless of whether the agricultural towing device 12 is in its middle position s1 or the eccentric positions s2 or s3. In figure 5 the distance a2 refers to the distance between the agricultural towing device 12 and the end x of the power take-off shaft 52 when the agricultural towing device 12 is in the middle position s1 or the first eccentric position s2, and the distance a'2 corresponds to the situation where the agricultural towing device 12 is in its outermost position s3.

The use and setting up for operation of the towing device in accordance with the invention is thus extremely easy and simple. The installation into place of the drawbar 10 and the guide stud 40 and the fitting into place of the fastening bolt 45 can be carried out from behind the tractor without having to go underneath the chassis of the tractor. Thus, the installation can also be carried out in difficult terrain ; e.g. an unfirm field. In addition, it needs to be pointed out, as was already mentioned, that in the towing device in accordance with the invention it is also possible to use a so-called "single-headed" drawber ; i.e. a drawbar whose other end is fitted with either a towing hook or an agricultural towing device. A "double-heeded" drawbar 10 would, however, appear to be a more advantageous solution since in the latter case both the towing hook end the agricultural towing device are always carried on the tractor.

## Claims

1. A towing device for a tractor which said towing device consists of the towing device's frame (20). Which from one end is hinged to the frame of the tractor via an essentially horizontal shaft which it surrounds, which towing device's frame (20) consists of the first hitching implements intended for connecting the drawbar (10), these first hitching implements being the bottom plate (24) and the top plate (25) bounding the aperture (27) which said first hitching implements are located in that end of the towing device's frame (20) which is opposite to the hinge joint (22, 51) of the towing device's frame, and the second hitching implements which consist the top support plate (32) and the bottom support plate (35) fitted midway along the towing device's frame (20) between the first hitching implements and the hinge joint (22, 51) of the towing device's frame (20), whereupon the drawbar (10) is arranged to be connected to the towing device's frame (20) by pushing through the aperture (27) and betweeen the top and bottom support plates (32, 35), **characterized** in that the the drawbar (10) is arranged to be connected to the aperture (27) with the fastening bolt (45) passing through the drawbar (10) and the top and bottom plates (24, 25), for which fastening bolt (45) several holes (28) have been formed in a direction transverse to the towing device's frame (20) in the bottom and top plates (24 and 25) bounding the aperture (27) and in the drawbar (10) several transversely oriented holes (13 ; 15, 16, 17) penetrating the drawbar (10), and that to facilitate the lateral control of the drawbar (10) several holes (14 ; 17, 18, 19) penetrating the drawbar (10) have been formed, into one of which said holes the guide stud (40) has been fitted for installing, for which guide stud (40) longitudinal grooves (33, 37) have been formed in the top support plate (32) and bottom support plate (35) delimiting the second hitching implements, the which grooves (33, 37) the said guide stud (40) is arranged to enter when the drawbar (10) is installed in place.

2. A towing device in accordance with claim 1, **characterized** in that the bottom support plate (35) extends longitudinally to the towing device's frame (20) past the top support plate (32) and inclined downward in the direction of the drawbar's (10) first hitching implements, and that the groove (37) formed in the bottom support plate (35) is extended in the said extended inclined part of the bottom support plate (35) to form a gap (36) which gap widens in the direction of the first hitching implements.

3. A towing device in accordance with claims 1 or 2, **characterized** in that the holes (28) formed in the bottom plate and top plate (24 and 25) bounding the aperture (27) have been arranged so that the longitudinal reach of the towing device's (10) towing point (11 ; 12) is essentially the same regardless the hole (28) used in connecting the drawbar (10) to the aperture (27).

4. A towing device in accordance with one of the preceding claims, **characterized** in that to improve the lateral control and installation of the drawbar (10), the guide stud (40) is provided with a collar (41) in the upper edge of which a chamfer (42) has been formed and that chamfers (34) corresponding to the guide stud's chamfer (42) have been formed in the groove (33) in the top support plate (32).

5. A towing device in accordance with one of the preceding claims, **characterized** in that the drawbar (10) is reversible in that the towing hook (11) has been constructed into its other end and the agricultural towing device (12) into the opposite end.

6. A towing device in accordance with claim 5,

characterized in that the towig hook (11) and the agricultural towing device (12) have been fitted into positions at rightangles to one another around the longitudinal axis of the drawbar (10) and that the drawbar (10) is square in cross section.

## Ansprüche

1. Kupplungsvorrichtung für einen Traktor, wobei die Kupplungsvorrichtung aus einem Rahmen (20) der Kupplungsvorrichtung besteht, welcher an einem Ende am Rahmen des Traktors über einen im wesentlichen horizontalen Schaft, welchen er umgibt, schwenkbar angelenkt ist, wobei der Rahmen (20) der Kupplungsvorrichtung erste Zugelemente für eine Verbindung mit einer Zugstange (10), wobei die ersten Zugelemente von einer eine Öffnung (27) begrenzenden Bodenplatte (24) und Deckplatte (25) gebildet sind und wobei die ersten Zugelemente an dem dem Schwenkgelenk (22, 51) des Rahmens (20) der Kupplungsvorrichtung gegenüberliegenden Ende des Rahmens (20) der Kupplungsvorrichtung angeordnet sind, und zweite Zugelemente umfaßt, welche von einer oberen Supportplatte (32) und einer unteren Supportplatte (35) gebildet werden, welche mittig am Rahmen (20) der Kupplungsvorrichtung zwischen den ersten Zugelementen und dem Schwenkgelenk (22, 51) des Rahmens (20) der Kupplungsvorrichtung angeordnet sind, wobei die Zugstange (10) derart angeordnet ist, daß sie mit dem Rahmen (20) der Kupplungsvorrichtung durch ein Hindurchtreten durch die Öffnung (27) und zwischen der oberen und unteren Supportplatte (32, 35) verbindbar ist, dadurch gekennzeichnet, daß die Zugstange (10) derart angeordnet ist, daß sie mit der Öffnung (27) mit einem Befestigungsbolzen (45) verbindbar ist, welcher durch die Zugstange (10) und die Deck- und die Bodenplatte (24, 25) hindurchtritt, wobei für den Befestigungsbolzen (45) in einer zum Rahmen (20) der Kupplungsvorrichtung normalen Richtung mehrere Löcher (28) in der die Öffnung (27) begrenzenden Deck- und Bodenplatte (24, 25) und in der Zugstange (10) mehrere normal orientierte und die Zugstange (10) durchdringende Löcher (13 ; 15, 16, 17) angeordnet sind, und daß zur Erleichterung der seitlichen Kontrolle der Zugstange (10) mehrere die Zugstange (10) durchdringende Löcher (14 ; 17, 18, 19) ausgebildet sind, wobei in eines der Löcher ein Führungsstift (40) für eine Positionierung eingepaßt wird, wobei für den Führungsstift (40) Längsnuten (33, 37) in der die zweiten Zugelemente begrenzenden oberen Supportplatte (32) und unteren Supportplatte (35) ausgebildet sind, wobei der Führungsstift (40) in die Nuten (33, 37) eindringbar angeordnet ist, wenn die Zugstange (10) in ihrer Position angeordnet ist.

2. Kupplungsvorrichtung nach Anspruch 1, dadurch gekennzeichnet, daß sich die untere Supportplatte (35) in Längsrichtung des Rahmens (20) der Kupplungsvorrichtung über die obere Supportplatte (32) hinaus erstreckt und nach unten in Richtung zu den ersten Zugelementen für die Zugstange (10) geneigt angeordnet ist, und daß die in der unteren Supportplatte (35) ausgebildete Nut (37) sich in diesen vorragenden, geneigten Teil der unteren Supportplatte (35) erstreckt, um einen Spalt (36) auszubilden, wobei sich der Spalt in Richtung zu den ersten Zugelementen vergrößert.

3. Kupplungsvorrichtung nach Anspruch 1 oder 2, dadurch gekennzeichnet, daß die in der die Öffnung (27) begrenzenden Boden- und Deckplatte (24, 25) ausgebildeten Löcher (28) derart angeordnet sind, daß die Längserstreckung des Kupplungspunktes (11, 12) der Kupplungsvorrichtung (10) im wesentlichen unabhängig vom Loch (28) ist, welches für die Verbindung der Zugstange (10) mit der Öffnung (27) verwendet wird.

4. Kupplungsvorrichtung nach einem der vorangehenden Ansprüche, dadurch gekennzeichnet, daß zur Verbesserung der seitlichen Kontrolle und Positionierung der Zugstange (10) der Führungsstift (40) mit einer Schulter (41) ausgebildet ist, an deren oberem Rand eine Abschrägung (42) ausgebildet ist, und daß der Aschrägung (42) des Führungstiftes entsprechende Abschrägungen (34) in der Nut (33) der oberen Supportplatte (32) ausgebildet sind.

5. Kupplungsvorrichtung nach einem der vorangehenden Ansprüche, dadurch gekennzeichnet, daß die Zugstange (10) reversibel ausgebildet ist und daß ein Zughaken (11) an einem Ende und eine Kupplungseinrichtung (12) für eine Landmaschine am anderen Ende ausgebildet ist.

6. Kupplungsvorrichtung nach Anspruch 5, dadurch gekennzeichnet, daß der Zughaken (11) und die Kupplungseinrichtung (12) für eine Landmaschine an um die Längsachse der Zugstange (10) unter einem rechten Winkel zueinander versetzten Positionen angeordnet sind und daß die Zugstange (10) rechteckigen bzw. quadratischen Querschnitt aufweist.

## Revendications

1. Dispositif d'attelage pour un tracteur consistant en un châssis (20) articulé à une extrémité au châssis du tracteur par l'intermédiaire d'un arbre horizontal qu'il entoure, lequel châssis (20) du dispositif d'attelage consiste en des premiers dispositifs d'accrochage prévus pour être reliés à la barre de traction (10), ces premiers dispositifs d'accrochage étant constitués par une plaque inférieure (24) et une plaque supérieure (25) délimitant une ouverture (27) et étant situés à l'extrémité du châssis (20) du dispositif d'attelage qui est à l'opposé d'un joint d'articulation (22, 51) de ce châssis, et en des seconds dispositifs d'accrochage qui consistent en une plaque de support supérieure (32) et une plaque de support inférieure (35) et qui sont disposées à mi-chemin le long du châssis (20) du dispositif d'attelage entre les premiers dispositifs d'accrochage et le joint d'articulation (22, 51) du châssis (20), la barre de traction (10) étant agencée de manière à être reliée au châssis (20) du dispositif d'attelage en étant poussée à travers l'ouverture (27) et entre les plaques de support supérieure et inférieure (32, 35), caractérisé en ce que la barre de traction (10) est agencée pour être reliée à l'ouverture (27) par un boulon de fixation (45) qui la traverse ainsi que les plaques supérieure et inférieure (24, 25), plusieurs trous (28) étant constitués pour ce boulon de fixation dans une direction transversale au châssis (20) du dispositif d'attelage dans les plaques inférieure et supérieure (24 et 25) limitant l'ouverture (27), et plusieurs trous (13 ; 15, 16, 17) orientés transversalement dans le barre de traction (10) et pénétrant dans cette dernière, et en ce que pour faciliter la commande latérale de la barre de traction (10) sont prévus plusieurs trous (14 ; 17, 18, 19) traversant la barre de traction (10), un tenon de guidage (40) étant introduit dans l'un desdits trous en vue de l'installation, des gorges longitudinales (33, 35) destinées au tenon de guidage (40) ayant été formées dans la plaque de support supérieure (32) et dans la plaque de support inférieure (35) délimitant les seconds dispositifs d'accrochage, ledit tenon de guidage (40) étant prévu pour pénétrer dans les gorges (33, 37) quand la barre de traction (10) est mise en place.

2. Dispositif d'attelage selon la revendication 1, caractérisé en ce que la plaque de support inférieure (35) s'étend longitudinalement en direction du châssis (20) du dispositif d'attelage au-delà de la plaque de support supérieure (22) et s'incline vers le bas dans la direction des premiers dispositifs d'accrochage de la barre de traction (10), et en ce que la gorge (37) constituée dans la plaque de support intérieure (35) s'étend dans ladite partie inclinée prolongée de cette plaque pour former un interstice (36) allant en s'élargissant dans la direction des premiers dispositifs d'accrochage.

3. Dispositif d'attelage selon la revendication 1 ou 2, caractérisé en ce que les trous (28) constitués dans la plaque inférieure et la plaque supérieure (24 et 25) qui limitent l'ouverture (27) sont agencés de manière que la distance longitudinale du pointd'attelage (11 ; 12) du dispositif d'attelage (10) soit essentiellement le même quel que soit le trou (28) utilisé pour relier la barre de traction (10) à l'ouverture (27).

4. Dispositif d'attelage selon l'une quelconque des revendications précédentes, caractérisé en ce que pour améliorer la commande latérale et l'installation de la barre de traction (10), le tenon de guidage (40) est muni d'une bride (41) sur le bord de laquelle est formé un chanfrein (42), et en ce que des chanfreins (34) correspondant au chanfrein (42) du tenon de guidage sont formés dans la gorge (33) de la plaque de support supérieure.

5. Dispositif d'attelage selon l'une quelconque des revendications précédentes, caractérisé en ce que la barre de traction est réversible, du fait que le crochet d'attelage (11) est formé à son autre extrémité et le dispositif d'attelage agricole (12) à l'extrémité opposée.

6. Dispositif d'attelage selon la revendication 5, caractérisé en ce que le crochet d'attelage (11) et le dispositif d'attelage agricole (12) sont disposés à angle droit l'un par rapport à l'autre autour de l'axe longitudinale de la barre de traction (10) et en ce que cette barre de traction (10) est de section carrée.

## FIG. 1

## FIG. 2

## FIG.3

EP 0 277 103 B1

FIG. 4

FIG. 6

FIG.5

EP 0 277 103 B1

32  33

34

21  21

37  38  35

FIG. 7

43
42
41
40

46

45

FIG.8    FIG.9